# EUROPEAN PATENT APPLICATION

(11) **EP 4 177 879 A1**
(43) Date of publication of application: **10.05.2023**
(21) Application number: 21853619.1
(22) Date of filing: 25.06.2021
(51) Int. Cl.: G09G 5/00, G09G 3/20, G06F 3/041

(54) **ELECTRONIC DEVICE AND METHOD FOR QUICKLY UPDATING PARTIAL REGION OF SCREEN**

(30) Priority: 04.08.2020 KR 20200097449
(71) Applicant: Samsung Electronics Co., Ltd., Gyeonggi-do 16677 (KR)
(72) Inventor: SIN, Youngcheol, Suwon-si Gyeonggi-do 16677 (KR); KIM, Geonhee, Suwon-si Gyeonggi-do 16677 (KR); KIM, Jungrim, Suwon-si Gyeonggi-do 16677 (KR); CHOI, Munwon, Suwon-si Gyeonggi-do 16677 (KR); PARK, Sungsoo, Suwon-si Gyeonggi-do 16677 (KR); LEE, Seungcheol, Suwon-si Gyeonggi-do 16677 (KR); HAN, Seungjae, Suwon-si Gyeonggi-do 16677 (KR)
(74) Representative: HGF
(86) International application number: PCT/KR2021/008041
(87) International publication number: WO 2022/030757

(57) **Abstract**

The present invention relates to an electronic device and method for quickly updating a partial region of a screen, wherein, in a normal driving state, a processor may control a DDI to receive a first user input for a first execution screen, generate a second execution screen corresponding to the first user input, and generate a first frame image including the second execution screen, such that a display displays the first frame image including the second execution screen, and in a partial update driving state, the processor may control the DDI to receive a second user input for the first execution screen, generate data of a partial region corresponding to the second user input, and store the data in a buffer memory, such that the display displays the partial region with reference to the buffer memory and displays the remaining regions excluding the partial region, in the same manner as the first execution screen.

## Description

### [Technical Field]

Various embodiments of the disclosure relate to an electronic device and a method for quickly updating a partial region of a screen.

### [Background Art]

An electronic device may display various screens, such as an image and text, via a display panel.

A mobile industry processor interface display serial interface (MIPI DSI) is a display standard for a portable electronic device such as a smartphone, a tablet personal computer, or a smart watch.

The MIPI DSI, as a display standard, may include a video mode and a command mode.

In a video mode, a host (e.g., a processor) may transmit an image frame to a display driver IC in real time. For example, in the video mode, even when an image to be displayed on a display panel is a still image, the host may repeatedly transmit the same image frame corresponding to the still image to the display driver IC.

In a command mode, the start of image frame transmission may be controlled by a tearing effect (TE) signal output from the display driver IC. The host (e.g., the processor) may control a transmission timing (e.g., a refresh rate) of an image frame transmitted to the display driver IC, based on a timing signal (e.g., a TE signal) output from the display driver IC.

### [Disclosure of Invention]

### [Technical Problem]

Electronic devices have been developed to have increased display panel resolution and support high-speed frequency driving (e.g., 60 Hz to 120 Hz).

As the application range of electronic devices expands, research and development of electronic devices for not only simply displaying information but also providing various user experiences or user interactions with a faster response speed is continuously required.

Various embodiments of the disclosure may provide an electronic device and a method for quickly updating a partial region of a screen.

### [Solution to Problem]

An electronic device according to various embodiments may include a display, a display driver IC (DDI) including a buffer memory, and a processor, wherein the processor is configured to, in a normal driving state, receive a first user input for a first execution screen of an application in an Nth frame period, generate a second execution screen of the application corresponding to the first user input in an (N+1)th frame period, generate a one-frame image including the second execution screen in an (N+2)th frame period, and control the DDI so that the display displays the one-frame image including the second execution screen in an (N+3)th frame period, and the processor is configured to, in a partial update driving state, receive a second user input for the first execution screen in an Mth frame period, generate data of a partial region corresponding to the second user input in an (M+1)th frame period, and store the data in the buffer memory, and control the DDI so that the display displays the partial region with reference to the buffer memory in an (M+2)th frame period and displays a remaining region other than the partial region in the same manner as the first execution screen.

A method of an electronic device including a display and a display driver IC (DDI) including a buffer memory according to various embodiments of the disclosure may include controlling the display in a normal driving state, and controlling the display in a partial update driving state, wherein the controlling the display in the normal driving state includes receiving a first user input for a first execution screen of an application in an Nth frame period, generating a second execution screen of the application corresponding to the first user input in an (N+1)th frame period, generating a one-frame image including the second execution screen in an (N+2)th frame period, and controlling the DDI so that the display displays the one-frame image including the second execution screen in an (N+3)th frame period, and the controlling the display in the partial update driving state includes receiving a second user input for the first execution screen in an Mth frame period, generating data of a partial region corresponding to the second user input in an (M+1)th frame period, and storing the data in the buffer memory, and controlling the DDI so that the display displays the partial region with reference to the buffer memory in an (M+2)th frame period and displays a remaining region other than the partial region in the same manner as the first execution screen.

### [Advantageous Effects of Invention]

An electronic device according to various embodiments of the disclosure may quickly update a partial region of a screen under a specified condition or execution environment, so as to provide an improved user experience and user interaction function.

### [Brief Description of Drawings]

FIG. 1 is a block diagram of an electronic device in a network environment, according to various embodiments;
FIG. 2 is a block diagram of a display device according to various embodiments;
FIG. 3 is a block diagram of an electronic device according to an embodiment of the disclosure;
FIG. 4 is a detailed block diagram of an electronic device according to an embodiment of the disclosure;
FIG. 5 is a block diagram of a display according to an embodiment of the disclosure;
FIG. 6 is a diagram illustrating a driving timing of an electronic device according to a normal driving state according to various embodiments;
FIG. 7 is an example illustrating a response delay of an electronic device in a normal driving state;
FIG. 8 is a diagram illustrating a driving timing of an electronic device according to a partial update driving state according to various embodiments;
FIG. 9 is a flowchart illustrating operations of an electronic device according to various embodiments;
FIG. 10 is a flowchart illustrating operations of an electronic device according to various embodiments;
FIG. 11 is an example illustrating an operation in which an electronic device detects removal of a stylus pen as a specified event, according to an embodiment;
FIG. 12 is a flowchart illustrating operations of an electronic device according to various embodiments; and
FIG. 13 is a flowchart illustrating operations of an electronic device according to various embodiments.

### [Mode for the Invention]

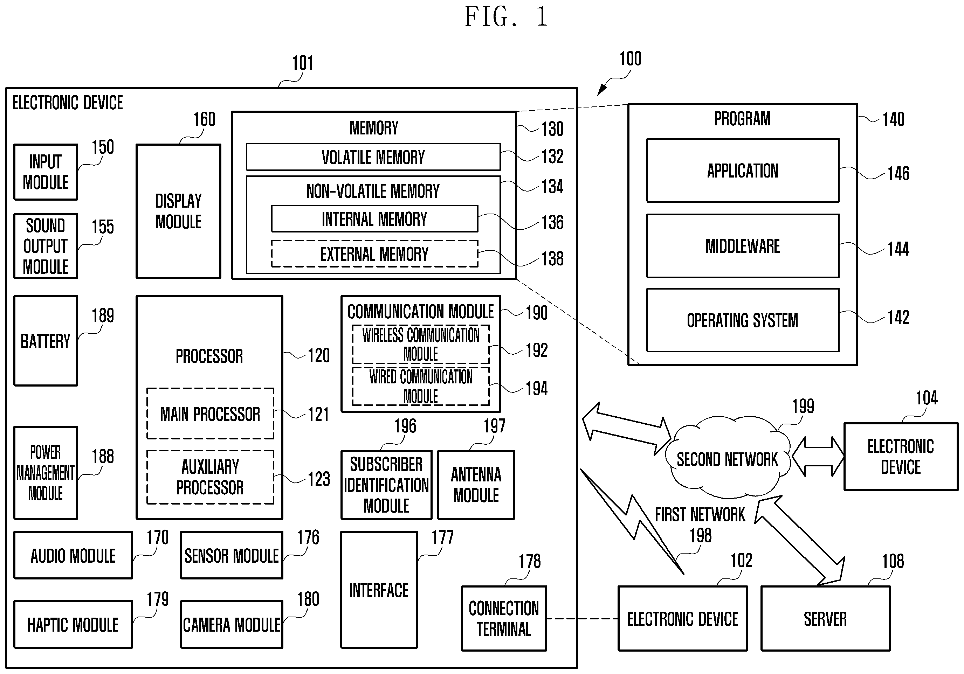

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

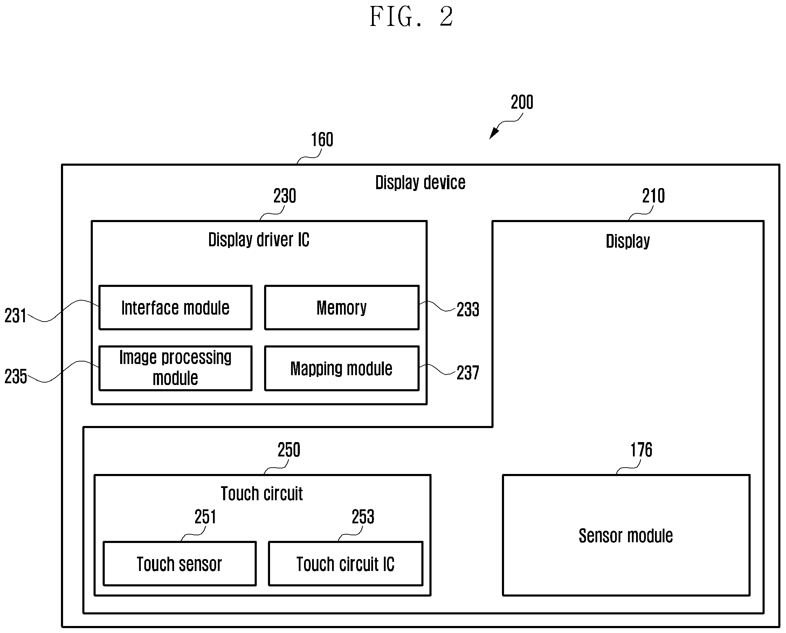

Fig. 2 is a block diagram 200 illustrating the display module 160 according to various embodiments. Referring to Fig. 2, the display module 160 may include a display 210 and a display driver integrated circuit (DDI) 230 to control the display 210. The DDI 230 may include an interface module 231, memory 233 (e.g., buffer memory), an image processing module 235, or a mapping module 237. The DDI 230 may receive image information that contains image data or an image control signal corresponding to a command to control the image data from another component of the electronic device 101 via the interface module 231. For example, according to an embodiment, the image information may be received from the processor 120 (e.g., the main processor 121 (e.g., an application processor)) or the auxiliary processor 123 (e.g., a graphics processing unit) operated independently from the function of the main processor 121. The DDI 230 may communicate, for example, with touch circuitry 250 or the sensor module 176 via the interface module 231. The DDI 230 may also store at least part of the received image information in the memory 233, for example, on a frame by frame basis. The image processing module 235 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 210. The mapping module 237 may generate a voltage value or a current value corresponding to the image data pre-processed or post-processed by the image processing module 235. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 210 may be driven, for example, based at least in part on the voltage value or the current value such that visual information (e.g., a text, an image, or an icon) corresponding to the image data may be displayed via the display 210.

According to an embodiment, the display module 160 may further include the touch circuitry 250. The touch circuitry 250 may include a touch sensor 251 and a touch sensor IC 253 to control the touch sensor 251. The touch sensor IC 253 may control the touch sensor 251 to sense a touch input or a hovering input with respect to a certain position on the display 210. To achieve this, for example, the touch sensor 251 may detect (e.g., measure) a change in a signal (e.g., a voltage, a quantity of light, a resistance, or a quantity of one or more electric charges) corresponding to the certain position on the display 210. The touch circuitry 250 may provide input information (e.g., a position, an area, a pressure, or a time) indicative of the touch input or the hovering input detected via the touch sensor 251 to the processor 120. According to an embodiment, at least part (e.g., the touch sensor IC 253) of the touch circuitry 250 may be formed as part of the display 210 or the DDI 230, or as part of another component (e.g., the auxiliary processor 123) disposed outside the display module 160.

According to an embodiment, the display module 160 may further include at least one sensor (e.g., a fingerprint sensor, an iris sensor, a pressure sensor, or an illuminance sensor) of the sensor module 176 or a control circuit for the at least one sensor. In such a case, the at least one sensor or the control circuit for the at least one sensor may be embedded in one portion of a component (e.g., the display 210, the DDI 230, or the touch circuitry 250)) of the display module 160. For example, when the sensor module 176 embedded in the display module 160 includes a biometric sensor (e.g., a fingerprint sensor), the biometric sensor may obtain biometric information (e.g., a fingerprint image) corresponding to a touch input received via a portion of the display 210. As another example, when the sensor module 176 embedded in the display module 160 includes a pressure sensor, the pressure sensor may obtain pressure information corresponding to a touch input received via a partial or whole area of the display 210. According to an embodiment, the touch sensor 251 or the sensor module 176 may be disposed between pixels in a pixel layer of the display 210, or over or under the pixel layer.

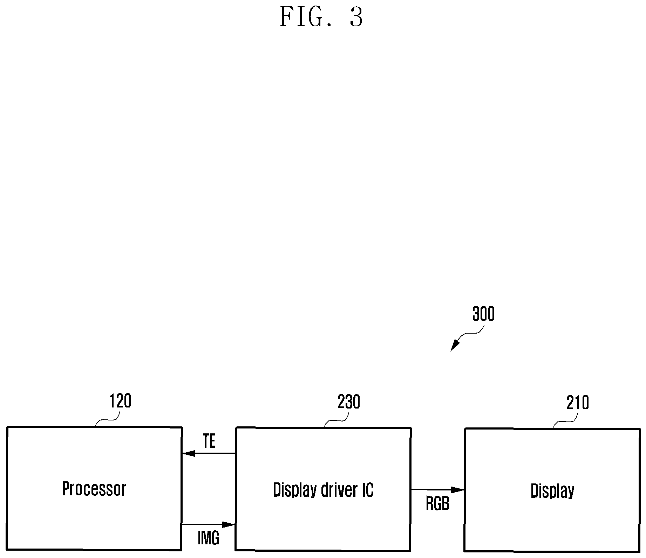

FIG. 3 is a block diagram of an electronic device 300 according to an embodiment of the disclosure. At least one of components of the electronic device 300 illustrated in FIG. 3 may be at least partially similar to the electronic device 101 illustrated in FIG. 1 and/or the display device 160 illustrated in FIG. 2, or may further include another embodiment.

Referring to FIG. 3, the electronic device 300 (e.g., the electronic device 101 of FIG. 1) according to an embodiment may include the processor 120 (e.g., the processor 120 of FIG. 1), the DDI 230 (e.g., the DDI 230 of FIG. 2), or the display 210 (e.g., the display of FIG. 2). The electronic device 300 according to an embodiment may operate based on a command mode which is a display standard defined by an MIPI. For example, the electronic device 300 may include the processor 120 and the DDI 230, and the processor 120 may serve as a host defined by the MIPI.

In an embodiment, the processor 120 may transmit an image frame (IMG) to the DDI 230, based on a timing signal (TE) (e.g., a tearing effect (TE) signal) output from the DDI 230. For example, a driving frequency (e.g., a refresh rate) at which the electronic device 300 drives the display 210 may be controlled based on the timing signal (TE) output from the DDI 230. The term "timing signal (TE)" used herein may refer to a tearing effect (TE) signal defined in the MIPI standard.

In an embodiment, the processor 120 may execute an application and sequentially render a plurality of image frames (IMGs) corresponding to an execution screen of the executed application. For example, the processor 120 may sequentially generate image frames (IMGs) corresponding to the execution screen according to a driving frequency (e.g., a refresh rate) for driving the display 210.

In an embodiment, the processor 120 may transmit the rendered image frames (IMGs) to the DDI 230 in response to the timing signal (TE).

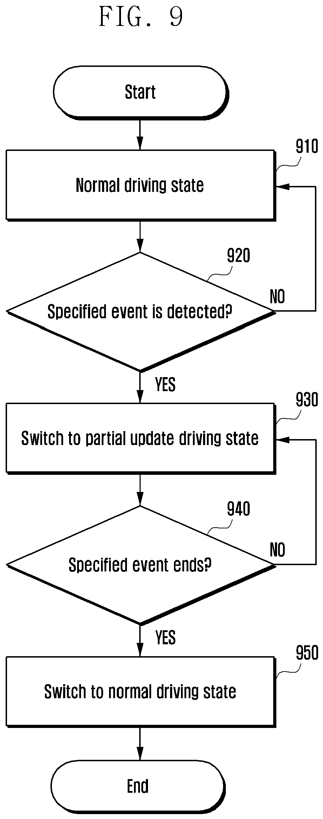

The processor 120 may detect a specified event, as will be described later with reference to operation 920 of FIG. 9. The processor 120 may switch a driving state of the display from a normal driving state to a partial update driving state, in response to detecting the specified event. When the specified event is not detected, the processor 120 may maintain the driving state of the display as the normal driving state. Alternatively, when it is detected that the specified event has ended, the processor 120 may switch the driving state of the display from the partial update driving state to the normal driving state. For another example, the processor 120 may detect a switch event. The processor 120 may switch the driving state of the display from the partial update driving state to the normal driving state, in response to detecting the switch event.

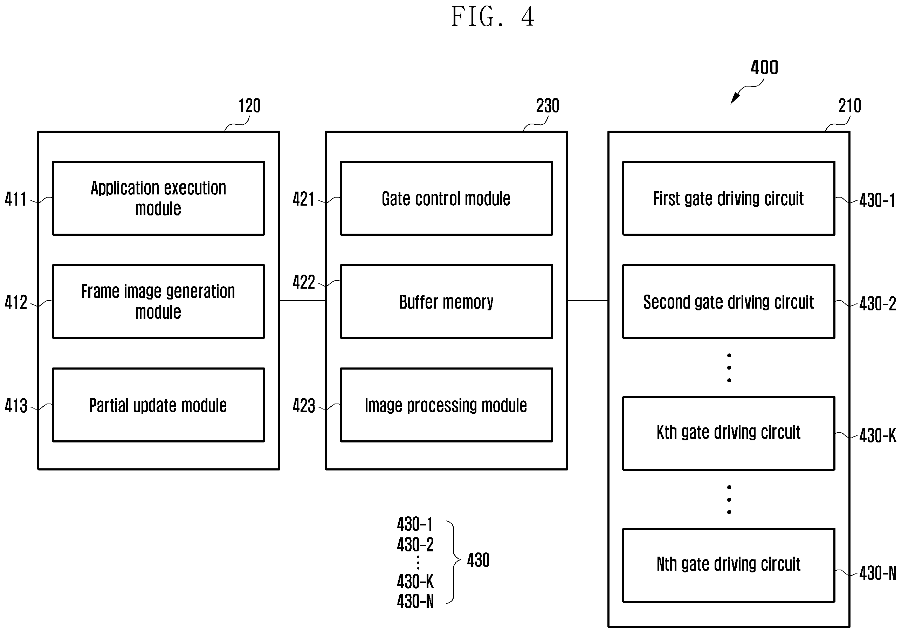

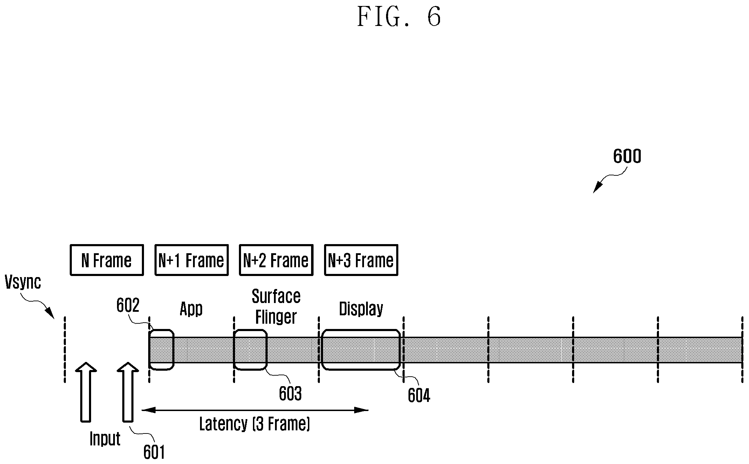

As will be described later with reference to FIG. 6, the normal driving state may be defined as a state in which the processor 120 sequentially stores the rendered image frames (IMGs) in a buffer memory 422 (e.g., a buffer memory 422 of FIG. 4) of the DDI 230 and the DDI 230 displays converted image frames (RGB) on the display by using the image frames (IMGs) stored in the buffer memory 422.

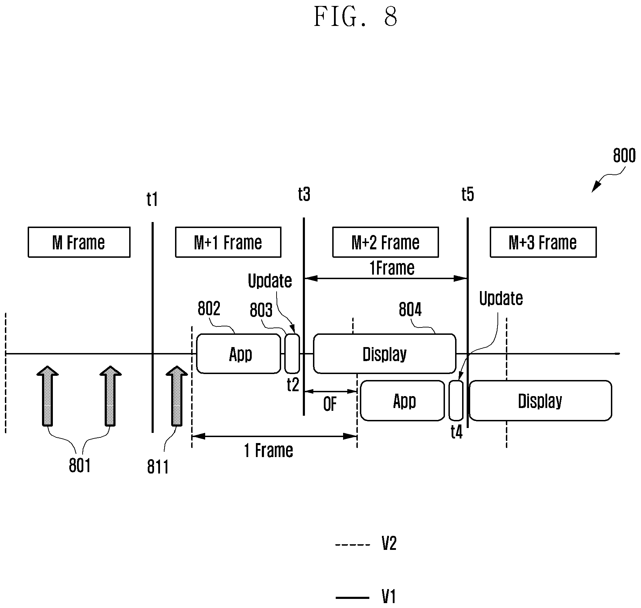

As will be described later with reference to FIG. 8, the partial update operation state may be defined as a state in which the processor 120 compares a previous frame (e.g., the (N-1)th frame) with a current frame (e.g., the Nth frame) to calculate a partial region, and stores data corresponding to the partial region in the buffer memory 422 (e.g., the buffer memory 422 of FIG. 4) of the DDI 230. In the partial update driving state, the data corresponding to the partial region is stored in the buffer memory 422 (e.g., the buffer memory 422 of FIG. 4) of the DDI 230, so that a response speed at which the partial region is displayed through the display may be faster than that in the normal driving state.

In an embodiment, the DDI 230 may drive the display 210 (e.g., a display panel), based on a received image frame (IMG). For example, the DDI 230 may drive the display 210 to display the image frame (IMG) received from the processor 120 for a one-frame period.

In an embodiment, the DDI 230 may store the received image frame (IMG) in the buffer memory 422 (e.g., the buffer memory 422 of FIG. 4), and display an image frame (IMG) corresponding to a one-frame stored in the buffer memory 422 through the display.

For example, the DDI 230 may align the image frames (IMGs) stored in the buffer memory 422 according to the characteristics (e.g., resolution) of the display, and/or pre-process or post-process (e.g., resolution, brightness, or size adjustment) the image frames (IMGs), based on the characteristics of the display 210, so as to generate converted image frames (RGB). The DDI 230 may drive the display 210 to display the converted image frames (RGB).

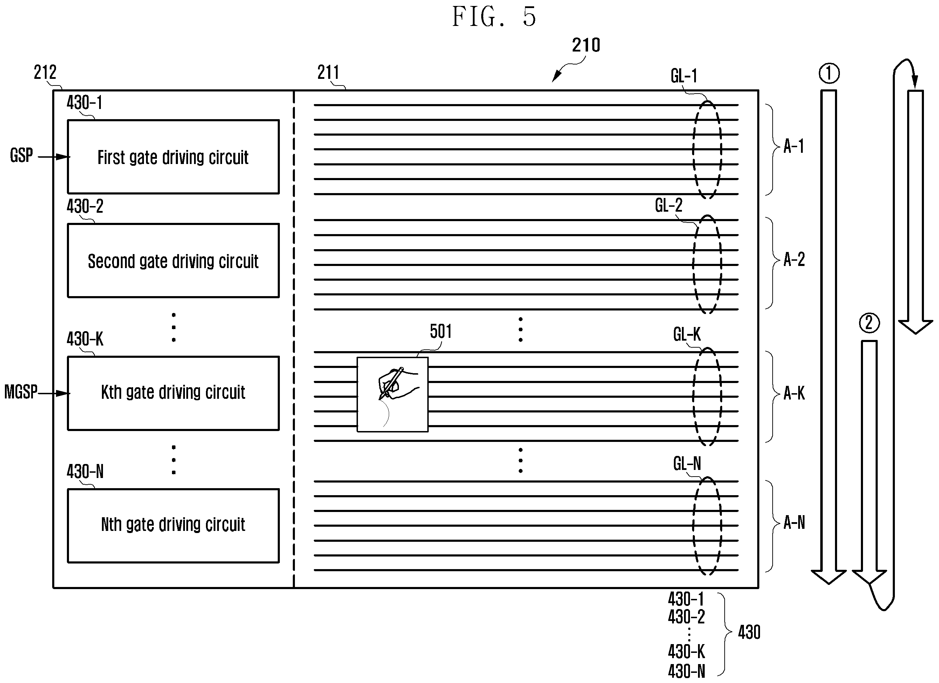

In an embodiment, the DDI 230 may generate a gate start pulse (GSP) (e.g., a gate start pulse of FIG. 5) at a cycle corresponding to a refresh rate, so as to determine a timing at which the display scans a screen. For example, the DDI 230 may supply the gate start pulse (GSP) to a gate driving circuit of the display at a start time point of each frame. The gate driving circuit (e.g., a gate driving circuit of FIG. 4) of the display may start scanning the screen of the display in response to the gate start pulse (GSP).

In the partial update driving state, the DDI 230 may generate a modulation start pulse (e.g., a modulation start pulse (MGSP) of FIG. 5) instead of the gate start pulse (GSP). The modulation start pulse may be a signal for changing a screen scanning sequence of the display. The gate driving circuit of the display may change the screen scanning sequence of the display in response to the modulation start pulse (MGSP).

In an embodiment, the DDI 230 may output a timing signal (TE), so as to determine a timing at which the processor 120 transmits an image frame (IMG). For example, in the electronic device 300 operating in the command mode of the MIPI, the timing signal (TE) may be a signal in which the DDI 230 informs a host (e.g., the processor 120) of a transmission timing of the image frame (IMG). In an embodiment, the processor 120, which is the host, may transmit the image frame (IMG) to the DDI 230 in response to the timing signal (TE) output from the DDI 230.

According to an embodiment, the display 210 may display a converted image frame (RGB) in the unit of a frame, based on the control of the DDI 230. For example, the display 210 may include at least one of an organic light emitting display panel (OLED), a liquid crystal display panel (LCD), a plasma display panel (PDP), an electrophoretic display panel, and/or an electrowetting display panel.

FIG. 4 is a detailed block diagram of the electronic device 101 according to an embodiment of the disclosure.

The electronic device 101 illustrated in FIG. 4 may include an embodiment which is at least partially similar to or different from the electronic device 101 illustrated in FIGS. 1 and 3.

Hereinafter, in conjunction with FIG. 4, only features of the electronic device 101 which are not described in FIGS. 1 and 3 or changed will be described.

Referring to FIG. 4, an electronic device 400 (e.g., the electronic device 101 of FIG. 1) may include the processor 120 (e.g., the processor 120 of FIG. 1), the DDI 230 (e.g., the DDI 230 of FIG. 3), and/or the display 210 (e.g., the display 210 of FIG. 3).

The processor 120 may include an application execution module 411, a frame image generation module 412, and a partial update module 413. According to an embodiment, a memory (the memory 100 of FIG. 1) may include the application execution module 411, the frame image generation module 412, and the partial update module 413. The memory (the memory 100 of FIG. 1) may cause the processor 120 to execute the application execution module 411, the frame image generation module 412, and the partial update module 413.

The application execution module 411 may execute at least one application stored in the memory 130 and generate an execution screen of the application. The application execution module 411 may change the execution screen according to a user input through the execution screen of the application. For example, the application execution module 411 may execute a drawing application, and when a user inputs a specified gesture through an execution screen of the drawing application, generate an object corresponding to the specified gesture and a new execution screen by combining the execution screen of the drawing application and the object. The application execution screen may transmit the new execution screen generated based on the user input to the frame image generation module 412.

The frame image generation module 412 (e.g., a SurfaceFlinger module of the Android operating system) may receive an execution screen of at least one application currently being executed from the application execution module 411, and generate a one-frame image by using the received execution screen of the application. According to an embodiment, the frame image generation module 412 may receive the execution screen generated by the application execution module 411 in the (N-1)th frame period, and generate a one-frame image by using the execution screen in the Nth frame period. According to an embodiment, the frame image generation module 412 may transmit the generated one-frame image to the DDI 230 during a blank period between the Nth frame period and the (N+1)th frame period. The DDI 230 may store the one-frame image received from the frame image generation module 412 in the buffer memory 422, and display the frame image in the (N+1)th frame period.

The partial update module 413 may control a partial update driving state of the display 210. The partial update module 413 may detect a specified event in a normal driving state. The partial update module 413 may control the DDI 230 and the display 210 in the partial update driving state in response to detecting the specified event. According to an embodiment, the specified event may include an operation in which a specified application is executed, an operation of detecting that a stylus pen is removed from the electronic device 400, and/or an operation of determining that a screen change between a previous frame and a current frame is less than a reference value during a specified time.

The partial update module 413 may compare the previous frame with the current frame so as to determine a region with the change as a partial region.

The partial update module 413 may identify whether a ratio of the partial region in the full resolution of the display 210 is smaller than a reference ratio. When the ratio of the partial region in the full resolution is smaller than the reference ratio, the partial update module 413 may switch to the partial update driving state in which the partial region is preferentially displayed.

In the partial update driving state, the partial update module 413 may generate data corresponding to the partial region, and preferentially store the data corresponding to the partial region in the buffer memory 422 of the DDI 230. For example, the partial update module 413 may store the data in the buffer memory 422 in a separately specified period so that an image corresponding to the partial region is displayed in a next frame period from a time point when the data corresponding to the partial region is generated. The specified period may be configured as a previous time point earlier than a time point of outputting a vertical synchronization signal for driving the display 210 by the DDI 230.

The partial update module 413 may supply a scan modulation signal (not illustrated) to the DDI 230 in the partial update driving state, so as to control the DDI 230 to change a screen scanning sequence of the display 210.

The DDI 230 may include a gate control module 421, the buffer memory 422, and/or an image processing module 423.

The gate control module 421 may control a gate driving circuit 430 of the display 210. The gate control module 421 may generate a gate start pulse (GSP) (e.g., a gate start pulse (GSP) of FIG. 5) at a cycle corresponding to a refresh rate, so as to determine a timing at which the display 210 scans a screen.

According to an embodiment, the gate control module 421 may supply the gate start pulse (GSP) to a first gate driving circuit 430-1 in the normal driving state, so as to control the screen scanning sequence of the display 210 to sequentially proceed from the first gate line to the last gate line.

According to an embodiment, when the scan modulation signal is received from the processor 120, the gate control module 421 may switch from the normal driving state to the partial update driving state, and transmit a modulation start pulse (MGSP) (e.g., a modulation start pulse (MGSP) of FIG. 5) to a specified gate driving circuit (e.g., a Kth gate driving circuit 430-K) corresponding to the scan modulation signal. For example, the gate control module 421 may supply the modulation start pulse (MGSP) to the Kth gate driving circuit 430-K according to the scan modulation signal, so as to control the gate driving circuit 430 to start scanning the screen of the display 210 from the Kth gate driving circuit 430-K.

The buffer memory 422 may be a component which stores a frame image received from the processor 120. The frame image stored in the buffer memory 422 may be changed in the unit of a one-frame period in the normal driving state. In the partial update driving state, the buffer memory 422 may store the data corresponding to the partial region at a specified time point earlier than a time point at which the frame image is stored in the normal driving state.

In the normal driving state, the DDI 230 may control the display 210 to display an image of a one-frame stored in the buffer memory 422 during a one-frame period.

In the partial update driving state, the DDI 230 may control the display 210 to display the image of the one-frame stored in the buffer memory 422 and including the data corresponding to the partial region, during the one-frame period.

For example, the image processing module 423 (e.g., the image processing module 235 of FIG. 2) may pre-process or post-process (e.g., resolution, brightness, or size adjustment) at least a part of the one-frame image stored in the buffer memory 422, based on the characteristics of the display 210.

The display 210 may include a plurality of gate driving circuits 430 configured to drive a plurality of gate lines arranged in a display region of the display 210. The plurality of gate lines may be electrically connected to a plurality of pixels configured in the display region of the display 210. The plurality of gate driving circuits 430 may apply a gate signal (or a scan signal) to the plurality of gate lines, so as to control a timing of scanning a screen displayed by the plurality of pixels.

According to an embodiment, the plurality of gate driving circuits 430 may include, for example, N gate driving circuits 430-1, 430-2, ..., 430-K, ..., and 430-N.

In the normal driving state, the plurality of gate driving circuits 430 may receive, from the DDI 230, a gate start pulse (GSP) at the cycle corresponding to the refresh rate, and sequentially output a gate signal from the first gate driving circuit 430 up to the Nth gate driving circuit 430.

The plurality of gate driving circuits 430 may change a sequence of outputting a gate signal, in the partial update driving state. For example, in the partial update driving state, the plurality of gate driving circuits 430 may change the sequence of outputting the gate signal in response to the modulation start pulse (MGSP).

When the modulation start pulse (MGSP) is supplied to the Kth gate driving circuit 430-K, the plurality of gate driving circuits 430 sequentially output a gate signal from the Kth gate driving circuit 430-K.

FIG. 5 is a block diagram of the display 210 according to an embodiment of the disclosure.

The display 210 illustrated in FIG. 5 may include an embodiment which is at least partially similar to or different from the display module 210 illustrated in FIG. 1, the display device illustrated in FIG. 2, and the display 210 illustrated in FIGS. 3 to 4.

Referring to FIG. 5, the display 210 (e.g., the display 210 of FIG. 3) may include a display region 211 in which a plurality of pixels are arranged, and a non-display region 212 in which the plurality of pixels are not configured and which is positioned at the outside of at least a part of the display region.

A plurality of pixels (not illustrated) are arranged in the display region 211, and the plurality of pixels may update a screen in response to a gate signal supplied through a plurality of gate lines GL-1, GL-2, GL-3, ..., and GL-N.

The plurality of gate driving circuits 430 (e.g., the gate driving circuit 430 of FIG. 4) configured to drive the plurality of gate lines GL-1, GL-2, GL-3, ..., and GL-N may be positioned in the non-display region 212. The plurality of gate driving circuits 430 may sequentially output a gate signal to the plurality of gate lines GL-1, GL-2, GL-3, ..., and GL-N.

According to an embodiment, the plurality of gate driving circuits 430 may include the N gate driving circuits 430-1, 430-2, ..., 430-K, ..., and 430-N, and the gate lines GL-1, GL-2, GL-3, ..., and GL-N of the display region 211 may define N gate line groups GL-1, GL-2, GL-3, ..., and GL-N connected to the N gate driving circuits 430-1, 430-2, ..., 430-K, ..., and 430-N, respectively. For example, the first gate driving circuit 430-1 may supply a gate signal to a first gate line group GL-1, and a second gate driving circuit 430-2 may supply a gate signal to a second gate line group GL-2.

In a normal driving state, the plurality of gate driving circuits 430 may sequentially output a gate signal from the first gate line group GL-1 to the last gate line group GL-N, as indicated by reference numeral ①. For example, in the normal driving state, the plurality of gate driving circuits 430 may be sequentially activated from the first gate driving circuit 430-1 up to an Nth gate driving circuit 430-N in response to a gate start pulse (GSP). The activation of the gate driving circuit 430 may mean that the gate driving circuit 430 outputs a gate signal.

In a partial update driving state, the plurality of gate driving circuits 430 may sequentially output a gate signal from a specified gate driving circuit (e.g., the Kth gate driving circuit 430-K) in response to a modulation start pulse (MGSP) received from the DDI 230.

For example, as indicated by the reference symbol ②, the plurality of gate driving circuits 430 may be sequentially activated from the Kth gate driving circuit 430-K up to the Nth gate driving circuit 430-N in response to the modulation start pulse (MGSP), and may be sequentially activated from the first gate driving circuit 430-1 to a (K-1)th gate driving circuit (not illustrated) after the Nth gate driving circuit 430-N is activated.

According to an embodiment, when screen scanning of the display 210 is started by outputting a gate signal from the Kth gate driving circuit 430-K, the screen update of the display 210 may sequentially proceed from a Kth display region A-K corresponding to the Kth gate driving circuit 430-K up to an Nth display region A-N corresponding to the Nth gate driving circuit 430-N which is the last gate driving circuit 430. When screen scanning of the Nth display region is completed, the screen update may proceed from a first display region A-1 corresponding to the first gate driving circuit 430-1 up to a (K-1)th display region (not illustrated) corresponding to a (K-1)th gate driving circuit 430 (not illustrated).

An electronic device (e.g., the electronic device 101 of FIG. 1) according to various embodiments of the disclosure may detect a user input 501 through the Kth display region A-K in the partial update driving state. When a remaining screen other than a part of an execution screen of an application processed according to the user input 501 is not different from a previous frame image, the electronic device 101 may determine, as a partial region, a part of the execution screen of the application processed according to the user input 501. The electronic device 101 may identify a coordinate value of the execution screen determined as the partial region, and change a screen scanning sequence of the display 210, based on the identified coordinate value. For example, when the execution screen corresponding to the partial region is the Kth display region A-K driven by the Kth gate driving circuit 430-K, the electronic device 101 may sequentially activate the gate driving circuits 430 from the Kth gate driving circuit 430-K.

An electronic device (e.g., the electronic device 101 of FIG. 1) according to various embodiments may include a display (e.g., the display 210 of FIG. 3), a display driver IC (DDI) (e.g., the DDI 230 of FIG. 3) including a buffer memory (e.g., the buffer memory 422 of FIG. 4), and a processor (e.g., the processor 120 of FIG. 1), wherein the processor 120 is configured to, in a normal driving state, receive a first user input for a first execution screen of an application in an Nth frame period, generate a second execution screen of the application corresponding to the first user input in an (N+1)th frame period, generate a one-frame image including the second execution screen in an (N+2)th frame period, and control the DDI 230 so that the display 210 displays the one-frame image including the second execution screen in an (N+3)th frame period, and the processor 120 is configured to, in a partial update driving state, receive a second user input for the first execution screen in an Mth frame period, generate data of a partial region corresponding to the second user input in an (M+1)th frame period, and store the data in the buffer memory 422, and control the DDI 230 so that the display 210 displays the partial region with reference to the buffer memory 422 in an (M+2)th frame period and displays a remaining region other than the partial region in the same manner as the first execution screen..

According to an embodiment, in the partial update driving state, the processor 120 may output a scan modulation signal to change a sequence for scanning of a screen of the display 210.

According to an embodiment, in the partial update driving state, the DDI 230 may drive the display 210 so that screen scanning starts from a region where the second user input is received, in response to the scan modulation signal.

According to an embodiment, in the partial update driving state, the processor 120 may define a one-frame period, based on a first vertical synchronization signal V1, generate data corresponding to the partial region, based on a second vertical synchronization signal V2 having a phase delayed by a specified offset time than the first vertical synchronization signal V1, and store the data in the buffer memory 422.

According to an embodiment, an output cycle of the first vertical synchronization signal V1 may be the same as an output cycle of the second vertical synchronization signal V2.

According to an embodiment, in the partial update driving state, the processor 120 may receive a third user input during a period before the second vertical synchronization signal V2 is output during the (M+1)th frame period, generate the data, based on the second user input and the third user input, and store the data in the buffer memory 422.

According to an embodiment, the processor 120 may switch from the normal driving state to the partial update driving state in response to detecting a specified event.

According to an embodiment, the specified event may include an operation in which a specified application is executed.

According to an embodiment, the specified event may include an operation of detecting that a screen change between a previous frame and a current frame is less than a reference value during a specified time.

According to an embodiment, the specified event may include an operation of detecting that a stylus pen is removed from the electronic device 101.

A method of an electronic device (e.g., the electronic device 101 of FIG. 1) including a display (e.g., the display 210 of FIG. 3) and a display driver IC (DDI) (e.g., the DDI 230 of FIG. 3) including a buffer memory (e.g., the buffer memory 422 of FIG. 4) according to various embodiments of the disclosure may include controlling the display 210 in a normal driving state, and controlling the display 210 in a partial update driving state, wherein the controlling the display in the normal driving state includes receiving a first user input for a first execution screen of an application in an Nth frame period, generating a second execution screen of the application corresponding to the first user input in an (N+1)th frame period, generating a one-frame image including the second execution screen in an (N+2)th frame period, and controlling the DDI 230 so that the display 210 displays the one-frame image including the second execution screen in an (N+3)th frame period, and the controlling the display in the partial update driving state includes receiving a second user input for the first execution screen in an Mth frame period, generating data of a partial region corresponding to the second user input in an (M+1)th frame period, and storing the data in the buffer memory 422, and controlling the DDI 230 so that the display 210 displays the partial region with reference to the buffer memory 422 in an (M+2)th frame period and displays a remaining region other than the partial region in the same manner as the first execution screen.

According to an embodiment, the controlling the display in the partial update driving state may further include supplying a scan modulation signal to the DDI 230 to change a sequence for scanning of a screen of the display 210.

According to an embodiment, the controlling the display in the partial update driving state may further include driving the display 210 by the DDI 230 so that screen scanning starts from a region where the second user input is received, in response to the scan modulation signal.

According to an embodiment, the controlling the display in the partial update driving state may include defining a one-frame period, based on a first vertical synchronization signal V1, and generating data corresponding to the partial region, based on a second vertical synchronization signal V2 having a phase delayed by a specified offset time than the first vertical synchronization signal V1, and storing the data in the buffer memory 422.

According to an embodiment, an output cycle of the first vertical synchronization signal V1 may be the same as an output cycle of the second vertical synchronization signal V2.

According to an embodiment, the controlling the display in the partial update driving state may further include receiving a third user input during a period before the second vertical synchronization signal V2 is output during the (M+1)th frame period, generating the data, based on the second user input and the third user input, and storing the data in the buffer memory 422.

The method according to an embodiment may further include switching from the normal driving state to the partial update driving state in response to detecting a specified event.

According to an embodiment, the specified event may include an operation in which a specified application is executed.

According to an embodiment, the specified event may include an operation of detecting that a screen change between a previous frame and a current frame is less than a reference value during a specified time.

According to an embodiment, the specified event may include an operation of detecting that a stylus pen is removed from the electronic device 101.

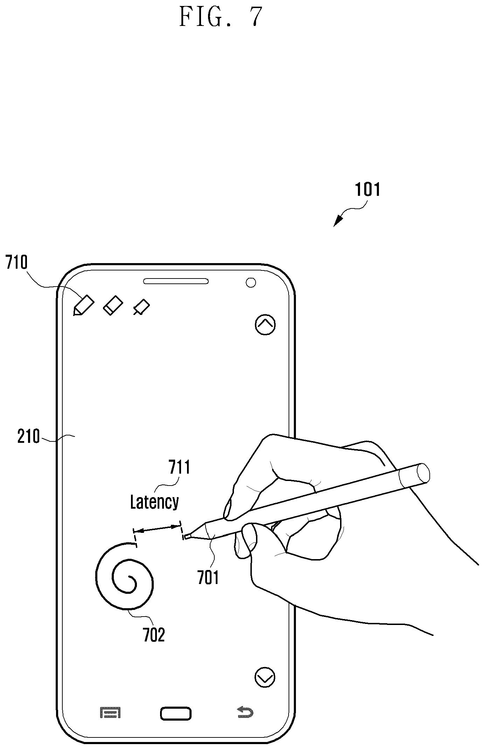

FIG. 6 is a diagram illustrating a driving timing of the electronic device 101 according to a normal driving state according to various embodiments. FIG. 7 is an example illustrating a response delay of the electronic device 101 in a normal driving state.

Referring to FIG. 6, the DDI 230 (e.g., the DDI 230 of FIG. 3) may output a vertical synchronization signal (Vsync), a timing signal (TE), and/or a gate start pulse (GSP) at a cycle corresponding to a refresh rate, and the signals may be defined as a hardware vertical synchronization signal (HW sync). In FIG. 6, a vertical synchronization signal (Vsync) is illustrated as an example of the hardware vertical synchronization signal (HW sync).

An electronic device (e.g., the electronic device 101 of FIG. 1) may define a one-frame period, based on an output timing of the vertical synchronization signal (Vsync). For example, the one-frame period may be defined as a period between output time points of the vertical synchronization signal (Vsync). The display 210 of the electronic device 101 may update a screen in the unit of a one-frame period.

According to various embodiments, a sequence in which the electronic device 101 updates the screen of the display 210 in the normal driving state may be as follows.

In the Nth frame period, the electronic device 101 may receive a user input 601. The user input 601 may be a user's touch input to an execution screen of an application. For example, the electronic device 101 may display the execution screen of the application and receive the user's touch input through the execution screen. For another example, the user input 601 may be a pen (e.g., an electromagnetic resonance pen, an active electrostatic pen, or a capacitive pen) input to the execution screen of the application.

In the (N+1)th frame period, the processor 120 of the electronic device 101 may process the user input 601 to generate an execution screen 602. For example, the application execution module 411 of the processor 120 may process the user input 601 received in the Nth frame period, which is a previous frame period, and generate the execution screen 602 corresponding to the user input.

In the (N+2)th frame period, the processor 120 of the electronic device 101 may generate a one-frame image 603, based on the generated execution screen 602. For example, the frame image generation module 412 (e.g., a SurfaceFlinger module of the Android operating system) may receive an execution screen of at least one application currently being executed from the application execution module 411, and generate the one-frame image 603 by using the received execution screen of the application. When the generation of the one-frame image 603 is completed, the processor 120 may store the one-frame image 603 in the buffer memory 422 of the DDI 230 in a blank period (not illustrated) between the (N+2)th frame period and the (N+3)th frame period.

In the (N+2)th frame period, the DDI 230 may control the display 210 to display a one-frame image 604 with reference to the buffer memory 422. The one-frame image 604 displayed by the display 210 in the (N+2)th frame period may include a result image obtained by processing the user input 601 received in the Nth frame period by the electronic device 101. Accordingly, in the normal driving state of the electronic device 101, it may take time which is about three frame periods from a time point when the user input 601 is received until the result image obtained by processing the user input is displayed.

A refresh rate of the electronic device 101 may be 60 Hz, 120 Hz, or 240 Hz, and three frame periods (e.g., about 50 ms when the refresh rate is 60 Hz) may feel short in an ordinary user environment. However, as illustrated in FIG. 7, when a user uses a specified application (e.g., a drawing application 710), the delay of three frame periods according to the normal driving state may be perceived by the user as a response delay in response to a touch input (or a pen input). For example, as illustrated in FIG. 7, the electronic device 101 may display an execution screen of a drawing application and receive a drawing input 701 from the user. When the drawing input 701 is received in the normal driving state, the electronic device 101 may display an object 702 corresponding to the drawing input 701 through the display 210 (e.g., the display module 160 of FIG. 1). As illustrated in FIG. 7, when the display 210 is driven in the normal driving state, a response delay 711 of about three frame periods may occur in displaying the object 702 corresponding to the drawing input 701.

As in the example of FIG. 7, the electronic device 101 according to various embodiments of the disclosure may control the display in a partial update driving state in response to a specified event, such as when a specified application is executed or when a rate of change between a previous frame and the next frame is less than a reference value.

FIG. 8 is a diagram illustrating a driving timing of the electronic device 101 according to a partial update driving state according to various embodiments.

Referring to FIG. 8, the DDI 230 (e.g., the DDI 230 of FIG. 3) may output a vertical synchronization signal (Vsync), a timing signal (TE), and/or a gate start pulse (GSP) at a cycle corresponding to a refresh rate, and the signals may be defined as a hardware vertical synchronization signal (HW sync) (hereinafter, referred to as a first vertical synchronization signal V1).

Referring to FIG. 8, the processor 120 (e.g., the processor 120 of FIG. 1) may output a software vertical synchronization signal (SW sync) (hereinafter, referred to as a second vertical synchronization signal V2) having a phase delayed by a specified time (e.g., an offset time (OF)) than the first vertical synchronization signal V1. Output frequencies of the first vertical synchronization signal V1 and the second vertical synchronization signal V2 may be the same, and an output cycle of each of the first vertical synchronization signal V1 and the second vertical synchronization signal V2 may be a one-frame period.

According to the illustrated example, each frame period during which an electronic device (e.g., the electronic device 101 of FIG. 1) drives a display (e.g., the display 210 of FIG. 3) may be defined based on the first vertical synchronization signal. For example, the display 210 may start scanning a screen in response to the first vertical synchronization signal.

According to the illustrated example, the processor 120 may perform an operation of generating data corresponding to a partial region, based on the second vertical synchronization signal V2, and storing the data corresponding to the partial region in the buffer memory 422 of the DDI 230. According to an embodiment, the operation of, by the processor 120, storing the data corresponding to the partial region in the buffer memory 422 of the DDI 230 according to the second vertical synchronization signal V2 may be configured to be performed at a previous time point (e.g., a time point t2 and/or a time point t4) earlier than an output time point (e.g., a time point t1, a time point t3, and/or a time point t5) of the first vertical synchronization signal V1 defining the start of each frame period. For example, in the illustrated example, the time point t1, the time point t3, and/or the time point t5 may indicate an output time point of the first vertical synchronization signal V1. For example, in the illustrated example, the time point t2 and the time point t4 may indicate a time point at which the operation of, by the processor 120, storing the data corresponding to the partial region in the buffer memory 422 of the DDI 230 according to the second vertical synchronization signal V2 is performed.

The electronic device 101 may define a one-frame period, based on an output timing of the first vertical synchronization signal V1. For example, the one-frame period may be defined as a period between output time points of the first vertical synchronization signal V1. The display 210 of the electronic device 101 may update the screen in the unit of one-frame period.

According to various embodiments, a sequence in which the electronic device 101 updates a screen of the display 210 in a partial update driving state may be as follows.

In the Mth frame period, the electronic device 101 may receive a user input 801. The user input 801 may be a user's touch input to an execution screen of an application. For example, the electronic device 101 may display the execution screen of the application and receive the user's touch input through the execution screen.

In the (M+1)th frame period, the processor 120 of the electronic device 101 may process the user input 801 to generate data 802 corresponding to a partial region. For example, the partial update module 413 of the processor 120 may process the user input 801 received in the Mth frame period, which is a previous frame period, and generate the data 802 corresponding to the partial region corresponding to the user input 801.

In the (M+1)th frame period, the processor 120 of the electronic device 101 may process a second user input 811 received before the second vertical synchronization signal V2 delayed by an offset time (OF) than the first vertical synchronization signal V2 is output. For example, the processor 120 may process not only the first user input 801 received in the Mth frame period but also the second user input 811 received before the second vertical synchronization signal V2 is output from among user inputs received in the (M+1)th frame period, so as to generate the data 802 corresponding to the partial region.

In the (M+1)th frame period, the processor 120 of the electronic device 101 may start an operation of calculating the partial region in response to the second vertical synchronization signal V2. When the calculation of the partial region is completed, the processor 120 may store the data 802 corresponding to the partial region in the buffer memory 422 of the DDI 230.

According to an embodiment, an operation 803 of, by the processor 120, storing the data 802 corresponding to the partial region in the buffer memory 422 of the DDI 230 according to the second vertical synchronization signal V2 may be configured to be performed at a previous time point (e.g., a time point t2 and/or a time point t4) earlier than an output time point (e.g., a time point t1, a time point t3, and/or a time point t5) of the first vertical synchronization signal V1 defining the start of the (M+2)th frame period.

In the (M+2)th frame period, the DDI 230 may control the display 210 to display a one-frame image 804 with reference to the buffer memory 422. The one-frame image 804 displayed by the display 210 in the (M+2)th frame period may include result images obtained by processing the user inputs 801 and 811 received before the second vertical synchronization signal V2 is output during the Mth frame period and the (M+1)th frame period, by the electronic device 101. Accordingly, in the partial update driving state of the electronic device 101, it may take time which is about one frame period or about two frame periods from a time point when the user inputs 801 and 811 are received until the result images obtained by processing the user inputs 801 and 811 are displayed. As described above, the partial update driving state of the electronic device 101 may reduce a response delay to the user inputs 801 and 811 compared to a normal driving state.

FIG. 9 is a flowchart illustrating operations of the electronic device 101 according to various embodiments.

At least some of the operations illustrated in FIG. 9 may be omitted. At least some operations mentioned with reference to other drawings herein may be additionally inserted before or after at least some of the operations illustrated in FIG. 9.

The operations illustrated in FIG. 9 may be performed by the processor 120 of the electronic device 101. For example, the memory 130 (e.g., the memory 130 of FIG. 1) of the electronic device 101 may store instructions which, when executed, cause the processor 120 to perform at least some of the operations illustrated in FIG. 9.

In operation 910, the electronic device 101 (e.g., the electronic device 101 of FIG. 1) may control the display 210 (e.g., the display 210 of FIG. 3) in a normal driving state. For example, the electronic device 101 may execute an application and display an execution screen of the application through the display 210. For example, the electronic device 101 may be in a normal driving state 600 of the electronic device 101 described with reference to FIG. 6.

In operation 920, the electronic device 101 may identify whether a specified event is detected. The specified event may include specified conditions for the electronic device 101 to switch to a partial update driving state.

According to an embodiment, the specified conditions may include an operation in which a specified application is executed. For example, when a drawing application is executed as the specified application, the electronic device 101 may determine that the specified event is detected. For example, the electronic device 101 may predict that a fast response speed will be required when the drawing application is executed, and may switch to the partial update driving state.

According to an embodiment, the electronic device 101 may determine a specified application selected according to a user input from among a plurality of applications as an application controlled in the partial update driving state. For example, the electronic device 101 may provide a configuration screen (not illustrated) for selecting the application controlled in the partial update driving state, and may determine whether to configure a specified application as the application controlled in the partial update driving state, based on the user input, through the configuration screen. When a currently executed application is configured as the application controlled in the partial update driving state, the electronic device 101 may determine that the specified condition is satisfied.

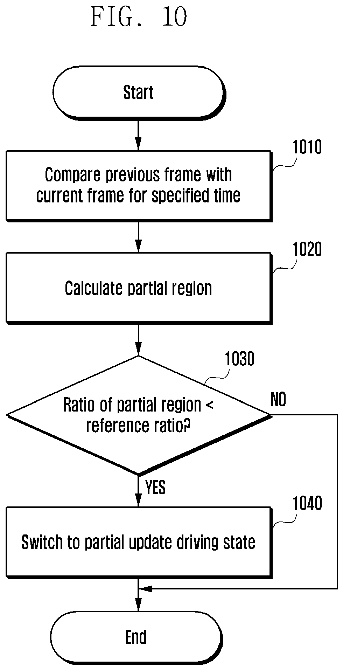

According to an embodiment, as described below with reference to FIG. 10, the specified conditions may include an operation of determining that a screen change between a previous frame and a current frame is less than a reference value during a specified time.

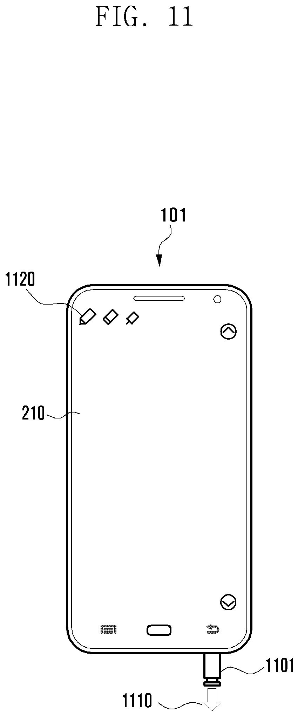

According to an embodiment, as illustrated in FIG. 11, the specified conditions may include an operation of detecting that a stylus pen 1101 is removed 1110 from the electronic device 101 (e.g., the electronic device 101 of FIG. 1). As illustrated in FIG. 11, the electronic device 101 may execute a drawing application 1120 in response to detecting that the stylus pen 1101 is removed 1110, and may control the display 210 in the partial update driving state.

When the specified event is detected (e.g., a result of operation 920 is "Yes"), the electronic device 101 may perform operation 930.

When the specified event is not detected (e.g., a result of operation 920 is "No"), the electronic device 101 may perform operation 910 again.

In operation 930, the electronic device 101 may switch a driving state of the display 210 to the partial update driving state. For example, the electronic device 101 may switch to a normal driving state 800 of the electronic device 101 described with reference to FIG. 8.

In operation 940, the electronic device 101 may identify whether the specified event ends. For example, when the specified conditions described with reference to operation 920 are not satisfied, the electronic device 101 may determine that the specified event has ended. For another example, the processor 101 may detect a switch event. The processor 120 may switch a driving state of the display from the partial update driving state to the normal driving state, in response to detecting the switch event.

When the specified event has ended (e.g., a result of operation 940 is "Yes"), the electronic device 101 may perform operation 950.

When the specified event is maintained (e.g., a result of operation 940 is "No"), the electronic device 101 may perform operation 930 again.

In operation 950, the electronic device 101 may switch a driving state of the display 210 to the normal driving state. For example, the electronic device 101 may switch to the normal driving state 600 of the electronic device 101 described with reference to FIG. 6.

FIG. 10 is a flowchart illustrating operations of the electronic device 101 according to various embodiments.

At least some of the operations illustrated in FIG. 10 may be omitted. At least some operations mentioned with reference to other drawings herein may be additionally inserted before or after at least some of the operations illustrated in FIG. 10.

The operations illustrated in FIG. 10 may be performed by the processor 120 of the electronic device 101. For example, the memory 130 (e.g., the memory 130 of FIG. 1) of the electronic device 101 may store instructions which, when executed, cause the processor 120 (e.g., the processor 120 of FIG. 1) to perform at least some of the operations illustrated in FIG. 10.

In operation 1010, the electronic device 101 (e.g., the electronic device 101 of FIG. 1) may compare a previous frame (e.g., a previous frame image) displayed through the display 210 (e.g., the display 210 of FIG. 3) with a current frame (e.g., a current frame image). The operation in which the electronic device 101 compares the previous frame with the current frame may be performed for a specified time.

In operation 1020, the electronic device 101 may calculate a partial region changed from the previous frame in the current frame. For example, the electronic device 101 may determine, as a partial region, a region in which a screen is updated every frame.

In operation 1030, the electronic device 101 may identify whether a ratio of the partial region in the full resolution of the display 210 is smaller than a reference ratio. The reference ratio may be configured in consideration of a time during which the electronic device 101 can process data corresponding to the partial region in a partial update driving state and complete a writing operation of the data to the buffer memory 422 of the DDI 230. For example, in the partial update driving state according to the example of FIG. 8 described above, when the processor 120 does not process the data corresponding to the partial region within a one-frame period, a quick screen update according to the partial update driving state may not be possible. For example, when the reference ratio is configured to be 10%, the electronic device 101 may identify whether the ratio of the partial region is less than 10%, and the ratio of 10% may be a value corresponding to a threshold time for processing and storing the data corresponding to the partial region within the one-frame period.

When the ratio of the partial region is smaller than the reference ratio (e.g., a result of operation 1030 is "Yes"), the electronic device 101 may perform operation 1040.

When the ratio of the partial region is greater than or equal to the reference ratio (e.g., a result of operation 1030 is "No"), the electronic device 101 may end the processing of FIG. 10 and maintain a normal driving state.

In operation 1040, the electronic device 101 may switch a driving state of the display 210 to the partial update driving state. For example, the electronic device 101 may switch to a partial update driving state 800 of the electronic device 101 described with reference to FIG. 8.

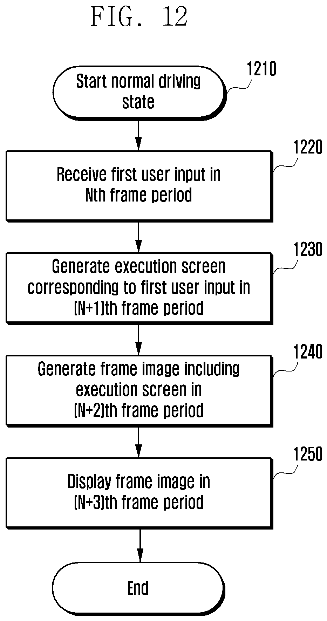

FIG. 12 is a flowchart illustrating operations of the electronic device 101 according to various embodiments.

At least some of the operations illustrated in FIG. 12 may be omitted. At least some operations mentioned with reference to other drawings herein may be additionally inserted before or after at least some of the operations illustrated in FIG. 12.

The operations illustrated in FIG. 12 may be performed by the processor 120 of the electronic device 101. For example, the memory 130 (e.g., the memory 130 of FIG. 1) of the electronic device 101 (e.g., the electronic device 101 of FIG. 1) may store instructions which, when executed, cause the processor 120 (e.g., the processor 120 of FIG. 1) to perform at least some of the operations illustrated in FIG. 12.

In operation 1210, the electronic device 101 may start controlling the display 210 in a normal driving state. For example, the electronic device 101 may execute an application and display an execution screen of the application through the display 210.

In operation 1220, the processor 120 of the electronic device 101 may receive a first user input in the Nth frame period. The first user input may be a user's touch input to an execution screen (e.g., a first execution screen) of the application. For example, the electronic device 101 may display the execution screen of the application and receive the user's touch input through the execution screen. For example, the Nth frame period illustrated in FIG. 6 may be the same as or similar to that in operation 1220.

In operation 1230, in the (N+1)th frame period, the processor 120 of the electronic device 101 may process the first user input, so as to generate an execution screen (e.g., a second execution screen). For example, the application execution module 411 of the processor 120 may process the user input received in the Nth frame period, which is a previous frame period, and generate an execution screen corresponding to the user input. For example, the (N+1)th frame period illustrated in FIG. 6 may be the same as or similar to that in operation 1230.

In operation 1240, in the (N+2)th frame period, the processor 120 of the electronic device 101 may generate a one-frame image, based on the generated execution screen (e.g., the second execution screen). For example, the frame image generation module 412 (e.g., a SurfaceFlinger module of the Android operating system) may receive an execution screen of at least one application currently being executed from the application execution module 411, and generate a one-frame image by using the received execution screen of the application. When the generation of the one-frame image is completed, the processor 120 may store the one-frame image in the buffer memory 422 of the DDI 230. For example, the (N+2)th frame period illustrated in FIG. 6 may be the same as or similar to that in operation 1240.

In operation 1250, in the (N+3)th frame period, the processor 120 of the electronic device 101 may control the display 210 (or the DDI 230) to display the one-frame image with reference to the buffer memory 422. The one-frame image displayed by the display 210 in the (N+2)th frame period may include the second execution screen as a result of processing the first user input received in the Nth frame period by the electronic device 101. For example, the (N+3)th frame period illustrated in FIG. 6 may be the same as or similar to that in operation 1250.

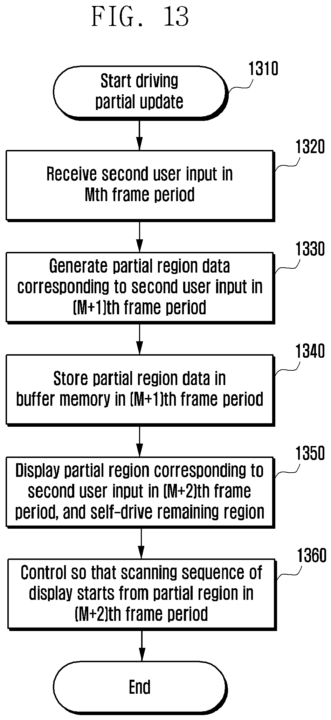

FIG. 13 is a flowchart illustrating operations of the electronic device 101 according to various embodiments.

At least some of the operations illustrated in FIG. 13 may be omitted. At least some operations mentioned with reference to other drawings herein may be additionally inserted before or after at least some of the operations illustrated in FIG. 13.

The operations illustrated in FIG. 13 may be performed by the processor 120 (e.g., the processor 120 of FIG. 1) of the electronic device 101 (e.g., the electronic device 101 of FIG. 1). For example, the memory 130 (e.g., the memory 130 of FIG. 1) of the electronic device 101 (e.g., the electronic device 101 of FIG. 1) may store instructions which, when executed, cause the processor 120 to perform at least some of the operations illustrated in FIG. 13.

In operation 1310, the electronic device 101 may start controlling the display 210 in a partial update driving state.

In operation 1320, the electronic device 101 may receive a second user input in the Mth frame period. The second user input may be a user's touch input to an execution screen (e.g., a first execution screen) of an application. For example, the Mth frame period illustrated in FIG. 8 may be the same as or similar to that in operation 1320.

In operation 1330, in the (M+1)th frame period, the processor 120 of the electronic device 101 may process a user input to generate data corresponding to a partial region. For example, the partial update module 413 of the processor 120 may process the user input received in the Mth frame period, which is a previous frame period, and generate data corresponding to a partial region corresponding to the user input.

In operation 1340, the electronic device 101 may store the data corresponding to the partial region in the buffer memory 422 of the DDI 230.

For example, the (M+1)th frame period illustrated in FIG. 8 may be the same as or similar to that in operations 1330 and 1340.

In operation 1350, in the (M+2)th frame period, the electronic device 101 may control the DDI 230 to display the partial region corresponding to the second user input, and control a remaining region to self-drive. For example, the DDI 230 may control the display 210 to display a one-frame image with reference to the buffer memory 422. The one-frame image displayed by the display 210 in the (M+2)th frame period may include a partial region as a result image obtained by processing a user input received before a second vertical synchronization signal V2 is output during the Mth frame period and the (M+1)th frame period, by the electronic device 101. In the buffer memory 422, data of the remaining region other than the data of the partial region may be data of a previous frame. In displaying the one-frame image in the (M+2)th frame period, the DDI 230 may drive the display 210 to display the data of the previous frame in the remaining region other than the partial region. For example, the DDI 230 may drive the display 210 to display the same frame image as the first execution screen having been displayed in the Mth frame period in the remaining region other than the partial region.

In operation 1350, the electronic device 101 may control a sequence for scanning of the display 210 to start from the partial region, in the (M+2)th frame period. For example, in the partial update driving state, the electronic device 101 may output a modulation start pulse (MGSP), so as to control a gate signal to be sequentially output from a specified gate driving circuit (e.g., the Kth gate driving circuit 430-K of FIG. 5) corresponding to the partial region, as indicated by reference numeral ② in FIG. 5.

For example, the (M+2)th frame period illustrated in FIG. 8 may be the same as or similar to that in operations 1350 and 1360.

## Claims

1. An electronic device comprising:
a display;
a display driver IC (DDI) comprising a buffer memory; and
a processor,
wherein the processor is configured to, in a normal driving state:
receive a first user input for a first execution screen of an application in an Nth frame period;
generate a second execution screen of the application corresponding to the first user input in an (N+1)th frame period;
generate a one-frame image comprising the second execution screen in an (N+2)th frame period; and
control the DDI so that the display displays the one-frame image comprising the second execution screen in an (N+3)th frame period, and
wherein the processor is configured to, in a partial update driving state:
receive a second user input for the first execution screen in an Mth frame period;
generate data of a partial region corresponding to the second user input in an (M+1)th frame period, and store the data in the buffer memory; and
control the DDI so that the display displays the partial region with reference to the buffer memory in an (M+2)th frame period and displays a remaining region other than the partial region in the same manner as the first execution screen.

2. The electronic device of claim 1, wherein the processor is configured to, in the partial update driving state, output a scan modulation signal to change a sequence for scanning of a screen of the display.

3. The electronic device of claim 2, wherein the DDI is configured to, in the partial update driving state, drive the display so that screen scanning starts from a region where the second user input is received, in response to the scan modulation signal.

4. The electronic device of claim 1, wherein the processor is configured to, in the partial update driving state:
define a one-frame period, based on a first vertical synchronization signal;
generate data corresponding to the partial region, based on a second vertical synchronization signal having a phase delayed by a specified offset time than the first vertical synchronization signal; and
store the data in the buffer memory.

5. The electronic device of claim 4, wherein an output cycle of the first vertical synchronization signal is the same as an output cycle of the second vertical synchronization.

6. The electronic device of claim 5, wherein the processor is configured to, in the partial update driving state:
receive a third user input during a period before the second vertical synchronization signal is output during the (M+1)th frame period;
generate the data, based on the second user input and the third user input; and
store the data in the buffer memory.

7. The electronic device of claim 1, wherein the processor is configured to switch from the normal driving state to the partial update driving state in response to detecting a specified event.

8. The electronic device of claim 7, wherein the specified event comprises an operation in which a specified application is executed.

9. The electronic device of claim 7, wherein the specified event comprises an operation of detecting that a screen change between a previous frame and a current frame is less than a reference value during a specified time.

10. The electronic device of claim 7, wherein the specified event comprises an operation of detecting that a stylus pen is removed from the electronic device.

11. A method of an electronic device comprising a display and a display driver IC (DDI) comprising a buffer memory, the method comprising:
controlling the display in a normal driving state; and
controlling the display in a partial update driving state,
wherein the controlling of the display in the normal driving state comprises:
receiving a first user input for a first execution screen of an application in an Nth frame period;
generating a second execution screen of the application corresponding to the first user input in an (N+1)th frame period;
generating a one-frame image comprising the second execution screen in an (N+2)th frame period; and
controlling the DDI so that the display displays the one-frame image comprising the second execution screen in an (N+3)th frame period, and
wherein the controlling of the display in the partial update driving state comprises:
receiving a second user input for the first execution screen in an Mth frame period;
generating data of a partial region corresponding to the second user input in an (M+1)th frame period, and storing the data in the buffer memory; and
controlling the DDI so that the display displays the partial region with reference to the buffer memory in an (M+2)th frame period and displays a remaining region other than the partial region in the same manner as the first execution screen.

12. The method of claim 11, wherein the controlling of the display in the partial update driving state further comprises supplying a scan modulation signal to the DDI to change a sequence for scanning of a screen of the display.

13. The method of claim 12, wherein the controlling of the display in the partial update driving state further comprises driving the display by the DDI so that screen scanning starts from a region where the second user input is received, in response to the scan modulation signal.

14. The method of claim 11, wherein the controlling of the display in the partial update driving state further comprises:
defining a one-frame period, based on a first vertical synchronization signal;
generating data corresponding to the partial region, based on a second vertical synchronization signal having a phase delayed by a specified offset time than the first vertical synchronization signal; and
storing the data in the buffer memory.

15. The method of claim 14, wherein an output cycle of the first vertical synchronization signal is identical to an output cycle of the second vertical synchronization.
